# FASCICULE DE BREVET EUROPEEN

(11) **EP 1 014 522 B1**
(45) Date de publication et mention de la délivrance du brevet: **28.02.2007**
(21) Numéro de dépôt: 99403124.3
(22) Date de dépôt: 13.12.1999
(51) Int. Cl.: H02B 13/065, H01H 33/56, H02G 5/06

(54) **Méthode de mesure de la densité d'un gaz diélectrique dans une ligne blindée enterrée**
Verfahren zur Messung der Dichte eines dielektrischen Gases in einer erdverlegten gekapselten Leitung
Method for measuring the density of a dielectric gas in a buried encapsulated cable

(30) Priorité: 18.12.1998 FR 9815981
(43) Date de publication de la demande: 28.06.2000
(73) Titulaire: Areva T&D SA, 92309 Levallois-Perret Cedex (FR)
(72) Inventeur: Marmonier, Jean, 73100 Aix Les Bains (FR)
(74) Mandataire: Poulin, Gérard

(56) Documents cités:
- EP-A- 0 875 973
- EP-A- 0 911 845
- DE-A- 3 428 322
- DE-A- 3 828 015
- DE-A- 3 910 696
- FR-A- 2 726 117
- FR-A- 2 730 308
- FR-A- 2 734 362

## Description

L'invention concerne les lignes électriques blindées enterrées à isolation gazeuse. Une telle ligne comprend une enveloppe métallique cylindrique remplie d'un gaz diélectrique sous pression, généralement de l'hexafluorure de soufre (SF6) ou un mélange d'héxafluorure et d'azote, et dans laquelle est disposé un conducteur électrique. En utilisation, l'enveloppe de la ligne est enterrée dans le sol à une profondeur de deux mètres ou plus.

L'invention porte plus particulièrement sur une méthode pour mesurer la densité du gaz diélectrique sous pression à l'intérieur de l'enveloppe de la ligne blindée enterrée.

La mesure de la densité du gaz contenu dans l'enveloppe d'une ligne blindée enterrée consiste habituellement à mesurer la pression P et la température T du gaz et à compenser la mesure de pression en fonction de la mesure de température selon des courbes d'isodensité D1,D2,D3 du gaz comme illustré sur la figure 1. Cette compensation peut être effectuée soit dans un module d'acquisition recevant les valeurs de pression et de température de deux capteurs distincts, soit directement dans le boîtier du capteur de pression qui est alors un capteur de densité. Dans ce dernier cas, la mesure de température est effectuée par ce capteur et le signal de sortie (par exemple un signal au standard industriel 4-20mA) de celui-ci est indicatif de la densité mesurée.

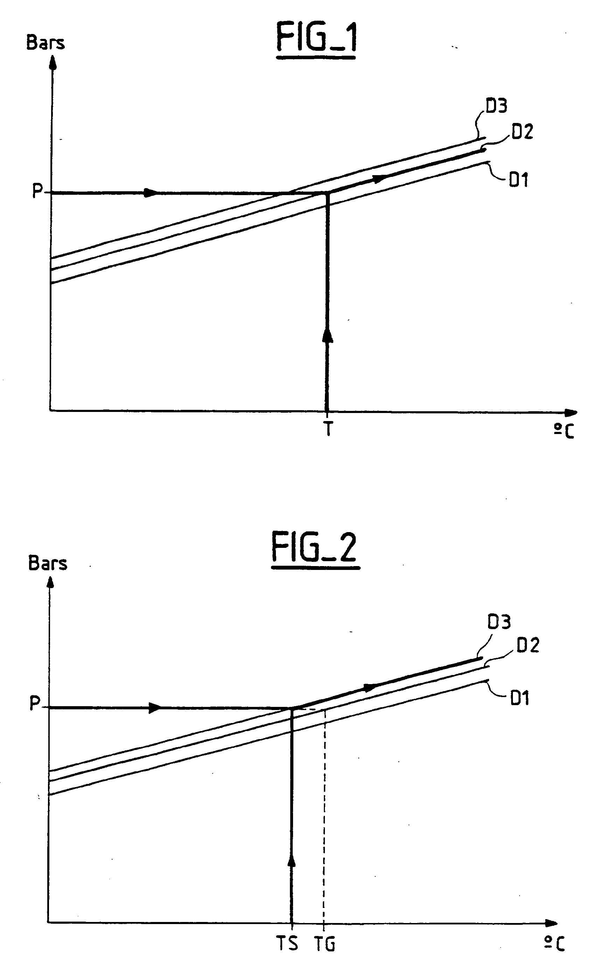

Une erreur importante dans la détermination de la densité du gaz est due au fait que le capteur de température, intégré ou non au capteur de pression, est monté sur la surface extérieure de l'enveloppe de la ligne de sorte que le capteur relève la température du gaz seulement dans une zone proche de la surface de l'enveloppe. Or cette température relevée n'est en générale pas égale à la température moyenne du gaz à l'intérieur de l'enveloppe d'où il suit que la densité mesurée est entachée d'une erreur de l'ordre de quelques pour cents. A titre d'exemple comme illustré sur la figure 2, la température TS de l'enveloppe peut être plus basse de quelques degrés celsius, typiquement 5°C, que la température moyenne du gaz TG à l'intérieur de l'enveloppe du fait du passage d'un courant nominal dans le conducteur de la ligne. Il en résulte que la densité déterminée D3 à partir de la mesure de pression P et de la mesure de température TS peut être supérieure à la densité réelle D2 du gaz. Cette erreur est pénalisante pour la protection de la ligne blindée.

Pour pallier cet inconvénient, il est connu d'effectuer une compensation de la densité mesurée en fonction du courant traversant le conducteur de la ligne en partant du principe que plus le courant traversant le conducteur de la ligne est important, plus l'erreur de mesure de la densité du gaz d'isolation est importante. Cette solution est toutefois coûteuse à mettre en oeuvre car elle requiert une mesure d'une grandeur physique supplémentaire qu'est le courant. Or la mesure du courant traversant la ligne blindée ne pouvant se faire qu'au niveau d'un étage d'entrée, il est nécessaire de distribuer cette information de mesure sur l'ensemble des capteurs de densité montés le long de la ligne blindée ce qui est en pratique complexe et coûteux.

Le document FR-A-2 734 362 décrit un procédé et un dispositif de détermination de la densité d'un gaz d'isolement d'un appareil électrique conformément à l'art antérieur.

Le but de l'invention est donc de proposer une méthode pour mesurer la densité d'un gaz diélectrique sous pression dans une ligne électrique blindée enterrée qui ne présente pas cet inconvénient.

La demanderesse a observé que dans le cas des lignes blindées enterrées, il existe un lien direct entre le courant traversant le conducteur de la ligne et l'écart de température entre la surface de l'enveloppe de la ligne et le gaz à l'intérieur de cette enveloppe du fait que la température ambiante autour de l'enveloppe varie peu et que l'enveloppe ne subit pas, dans le cas d'une ligne blindée enterrée, les effets du rayonnement solaire notamment.

Plus particulièrement, l'invention a pour objet une méthode pour mesurer la densité d'un gaz diélectrique sous pression dans une ligne électrique blindée enterrée consistant à mesurer la pression et la température du gaz diélectrique par l'intermédiaire d'un capteur monté sur l'enveloppe de la ligne et à réaliser une compensation de la mesure de pression en fonction de la mesure de température selon des courbes d'isodensité du gaz diélectrique, caractérisée en ce que les courbes d'isodensité sont corrigées à partir d'une courbe représentative d'un écart entre la température de surface de l'enveloppe de la ligne et la température moyenne du gaz à l'intérieur de la ligne pour des courants croissants traversant le conducteur de la ligne.

L'invention s'étend à un capteur, présentant les caractéristiques énoncées à la revendication 2, pour la mise en oeuvre de la méthode selon l'invention.

La méthode selon l'invention sera encore mieux comprise à la lecture de la description qui suit en relation avec les dessins.

La figure 1 illustre par un graphe Pression en bars/Température en degrés Celsius, la méthode pour mesurer la densité du gaz diélectrique dans une ligne blindée enterrée selon des courbes d'isodensité.

La figure 2 illustre par un graphe analogue à celui de la figure 1, l'erreur de mesure de la densité du gaz quand on ne tient pas compte du fait que la température relevée par un capteur monté sur l'enveloppe de la ligne est différente de la température moyenne du gaz à l'intérieur de l'enveloppe.

La figure 3 illustre l'écart existant entre la température à la surface de l'enveloppe de la ligne blindée enterrée et la température moyenne du gaz à l'intérieur de l'enveloppe pour des courants croissants traversant le conducteur de la ligne.

La figure 4 illustre par un graphe analogue à celui de la figure 1 la méthode de mesure de la densité du gaz diélectrique dans une ligne blindée enterrée à l'aide de courbes d'isodensité corrigées à partir d'une courbe représentative d'un écart entre la température de surface de l'enveloppe de la ligne et la température moyenne du gaz à l'intérieur de la ligne pour des courants croissants traversant le conducteur de la ligne.

La figure 5 illustre très schématiquement une ligne blindée enterrée avec un capteur de densité pour la mise en oeuvre de la méthode selon l'invention.

Les figures 1 et 2 ont déjà été présentées ci-dessus.

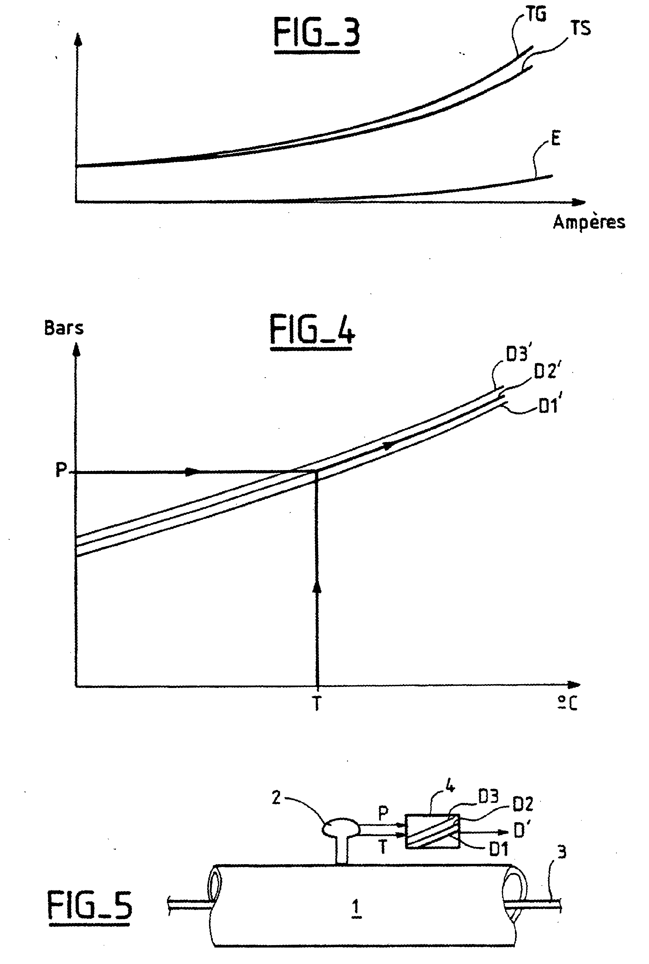

Sur la figure 3, la courbe TG représente l'évolution de la température moyenne du gaz dans l'enveloppe de la ligne blindée enterrée en fonction de courants d'intensité croissante traversant le conducteur de la ligne blindée. La courbe TS représente l'évolution de la température de surface de l'enveloppe de la ligne blindée enterrée en fonction de courants d'intensité croissante traversant le conducteur de la ligne blindée. Les courbes TS et TG sont obtenues par des mesures expérimentales. La courbe E représente l'écart entre les courbes TG et TS. A chaque valeur de température mesurée par un capteur de température monté sur la surface extérieure de l'enveloppe de la ligne blindée enterrée correspond donc un écart entre la température mesurée par le capteur et la température moyenne du gaz à l'intérieur de l'enveloppe de la ligne blindée. Et à chaque écart entre la température mesurée par le capteur de température et la température moyenne du gaz à l'intérieur de l'enveloppe de la ligne blindée correspond une erreur de calcul de la densité du gaz si l'on tient compte des courbes d'isodensité illustrées sur les figures 1 et 2.

Figure 4, cette erreur est intégrée dans les courbes d'isodensité corrigées D1',D2',D3'. Ces courbes d'isodensité corrigées correspondent aux courbes d'isodensité D1,D2,D3 augmentées chacune en ordonnées de la courbe E.

Par conséquent, avec la méthode selon l'invention, la mesure de la densité du gaz diélectrique sous pression à l'intérieur de l'enveloppe 1 (figure 5) d'une ligne blindée enterrée est calculée seulement à partir d'une mesure de pression P et de température T du gaz obtenue à l'aide d'un capteur 2 monté sur la surface extérieure de l'enveloppe et en communication avec le volume intérieur de l'enveloppe. Il n'est pas nécessaire de mesurer le courant traversant le conducteur 3 de la ligne blindée. Les courbes d'isodensité corrigées D1',D2',D3' peuvent être programmées dans les circuits de calcul du capteur 2 s'il s'agit d'un capteur de densité ou dans une unité d'acquisition 4 si on utilise en fait deux capteurs pour mesurer la pression et la température, de façon à obtenir une valeur de densité D' du gaz diélectrique avec une précision améliorée.

## Revendications

1. Une méthode pour mesurer la densité d'un gaz diélectrique sous pression dans une ligne électrique blindée enterrée consistant à mesurer la pression (P) et la température (T) du gaz diélectrique par l'intermédiaire d'un capteur (2) monté sur l'enveloppe (1) de la ligne et à réaliser une compensation de la mesure de pression en fonction de la mesure de température selon des courbes d'isodensité (D1,D2,D3) du gaz diélectrique, **caractérisé en ce que** les courbes d'isodensité sont corrigées à partir d'une courbe (E) représentative d'un écart entre la température de surface de l'enveloppe de la ligne et la température moyenne du gaz à l'intérieur de la ligne pour des courants croissants traversant le conducteur de la ligne.

2. Un capteur pour mesurer la densité d'un gaz diélectrique sous pression dans une ligne électrique blindée enterrée comprenant un moyen (2) destiné à être monté sur l'enveloppe de la ligne pour mesurer la pression (P) et la température (T) du gaz diélectrique et un moyen (4) pour réaliser une compensation de la mesure de pression en fonction de la mesure de température selon des courbes d'isodensité (D1',D2',D3') du gaz diélectrique corrigées à partir d'une courbe (E) représentative d'un écart entre la température de surface de l'enveloppe de la ligne et la température moyenne du gaz à l'intérieur de la ligne pour des courants croissants traversant le conducteur de la ligne.

## Claims

1. A method of measuring the density of a dielectric gas under pressure in a buried metal-clad electricity line, the method consisting in measuring the pressure (P) and the temperature (T) of the dielectric gas by means of a sensor (2) mounted on the case (1) of the line, and in compensating the pressure measurement as a function of the temperature measurement using constant density curves (D1, D2, D3) for the dielectric gas, the method being **characterized in that** the constant density curves are corrected on the basis of a curve (E) representative of the difference between the temperature at the surface of the case of the line and the mean temperature of the gas inside the line for increasing amounts of current carried by the line conductor.

2. A sensor for measuring the density of a dielectric gas under pressure in a buried metal-clad electricity line including means (2) for mounting on the case of the line to measure the pressure (P) and the temperature (T) of the dielectric gas, and means (4) for compensating the pressure measurement as a function of the temperature measurement using constant density curves (D1', D2', D3') for the dielectric gas as corrected on the basis of a curve (E) representative of the difference between the temperature at the surface of the case of the line and the mean temperature of the gas inside the line for increasing amounts of current being carried by the line conductor.

## Patentansprüche

1. Verfahren zur Messung der Dichte eines dielektrischen Druckgases in einer erdverlegten, gekapselten Stromleitung, das darin besteht, den Druck (P) und die Temperatur (T) des dielektrischen Gases mit einem Messfühler (2) zu messen, der an dem Mantel (1) der Leitung montiert ist, und einen Ausgleich der Druckmessung in Abhängigkeit von der Temperaturmessung nach den Isodensitäts-Kennlinien (D1, D2, D3) von dielektrischem Gas durchzuführen, **dadurch gekennzeichnet, dass** die Isodensitäts-Kennlinien ausgehend von einer Kennlinie (E) korrigiert werden, die repräsentativ ist für eine Abweichung zwischen der Oberflächentemperatur des Mantels der Leitung und der Durchschnittstemperatur des Gases im Inneren der Leitung bei durch den Leiter der Leitung fließenden, ansteigenden Strömen.

2. Messfühler zum Messen der Dichte eines dielektrischen Druckgases in einer erdverlegten, gekapselten Stromleitung, mit einer Vorrichtung (2), die dazu bestimmt ist, an den Mantel der Leitung montiert zu werden, um den Druck (P) und die Temperatur (T) des dielektrischen Gases zu messen, und mit einer Vorrichtung (4), um einen Ausgleich der Druckmessung in Abhängigkeit von der Temperaturmessung nach Isodensitäts-Kennlinien (D1', D2', D3') von dielektrischem Gas durchzuführen, die ausgehend von einer Kennlinie (E) korrigiert werden, die repräsentativ ist für eine Abweichung zwischen der Oberflächentemperatur des Mantels der Leitung und der Durchschnittstemperatur des Gases im Inneren der Leitung bei durch den Leiter der Leitung fließenden, ansteigenden Strömen.
